(19) Europäisches Patentamt
European Patent Office
Office européen des brevets

(11) Veröffentlichungsnummer: **0 254 683 A2**

(12) # EUROPÄISCHE PATENTANMELDUNG

(21) Anmeldenummer: **87810399.3**

(22) Anmeldetag: **16.07.87**

(51) Int. Cl.[4]: **C 08 K 5/53**
C 09 K 21/12

(30) Priorität: **22.07.86 GB 8617861**

(43) Veröffentlichungstag der Anmeldung:
**27.01.88 Patentblatt 88/04**

(84) Benannte Vertragsstaaten:
**BE CH DE ES FR GB IT LI NL SE**

(71) Anmelder: **CIBA-GEIGY AG**
**Klybeckstrasse 141**
**CH-4002 Basel (CH)**

(72) Erfinder: **Dellar, Richard John, Dr.**
**2 Wellington Road**
**Timperley Cheshire WA15 8QY (GB)**

**Richardson, Norman**
**21, Grey Street**
**Middleton Manchester M24 3UF (GB)**

**Clubley, Brian George**
**7 Green Villa Park**
**Wilmslow Cheshire SK9 6EJ (GB)**

(54) **Flammhemmende Zusammensetzungen.**

(57) Gegenstand der Erfindung sind Zusammensetzungen, die aus einem bei Temperaturen bis 160°C verarbeitbaren Harz mit einer darin eingearbeiteten flammhemmenden Menge eines durch Umsetzung von Dimethyl-methylphosphonat, Monomethyl-methylphosphonat oder Methylphosphonsäure mit einer Verbindung der allgemeinen Formel (I)

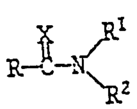

(I)

worin X für O oder S, $R^1$ für H, Alkyl mit 1 bis 4 Kohlenstoffatomen, Alkenyl mit bis zu 4 Kohlenstoffatomen, CN, $CONH_2$ oder $NH_2$, $R^2$ für H, Alkyl mit 1 bis 4 Kohlenstoffatomen oder Alkenyl mit bis zu 4 Kohlenstoffatomen stehen oder $R^1$ und $R^2$ zusammen mit dem Stickstoffatom, an das sie gebunden sind, einen heterocyclischen Ring mit bis zu 6 Kohlenstoffatomen bilden, der gegebenenfalls ein weiteres Heteroatom enthalten kann, und R für H, eine Alkylgruppe mit 1 bis 8 Kohlenstoffatomen, eine Arylgruppe mit 6 bis 10 Kohlenstoffatomen, eine Cycloalkylgruppe mit 5 bis 12 Kohlenstoffatomen oder eine heterocyclische Gruppe mit bis zu 9 Ringkohlenstoffatomen steht, oder zusammen mit $R^1$ eine Alkylenkette mit 3 bis 10 Kohlenstoffatomen bildet oder eine Gruppe $NHR^3$ darstellt, worin $R^3$ H, Alkyl mit 1 bis 4 Kohlenstoffatomen, Alkenyl mit bis zu 4 Kohlenstoffatomen, CN, $CONH_2$ oder $NH_2$ bedeutet oder zusammen mit $R^1$ eine Alkylenkette mit 2 oder 3 Kohlenstoffatomen bildet, oder R eine Gruppe

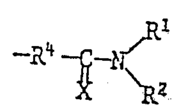

darstellt, worin $R^1$ und $R^2$ die oben angegebenen Bedeutungen haben und $R^4$ eine direkte Bindung, eine Alkylengruppe mit bis zu 8 Kohlenstoffatomen oder eine Arylengruppe mit 6 bis 10 Kohlenstoffatomen bedeutet, gebildeten Salzes bestehen.

EP 0 254 683 A2

**Beschreibung**

Flammhemende Zusammensetzungen

Vorliegende Erfindung betrifft die Verwendung organischer Salze von Phosphonsäuren, um Harze bei Temperaturen bis zu 160°C verarbeitbar und flammhemmender zu machen.

Gegenstand vorliegender Erfindung ist dementsprechend ein bei Temperaturen bis zu 160°C verarbeitbares Harz mit einer darin eingearbeiteten flammhemmenden Menge eines durch Umsetzung von Dimethyl-methylphosphonat, Monomethyl-methylphosphonat oder Methylphosphonsäure mit einer Verbindung der allgemeinen Formel (I) gebildeten Salzes

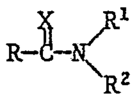

(I),

worin X für O oder S, $R^1$ für H, Alkyl mit 1 bis 4 Kohlenstoffatomen, Alkenyl mit bis zu 4 Kohlenstoffatomen, CN, $CONH_2$ oder $NH_2$, und $R^2$ für H, Alkyl mit 1 bis 4 Kohlenstoffatomen oder Alkenyl mit bis zu 4 Kohlenstoffatomen stehen oder $R^1$ und $R^2$ zusammen mit dem Stickstoffatom, an das sie gebunden sind, einen heterocyclischen Ring mit bis zu 6 Kohlenstoffatomen bilden, der gegebenenfalls ein weiteres Heteroatom enthalten kann, und R für H, eine Alkylgruppe mit 1 bis 8 Kohlenstoffatomen, eine Arylgruppe mit 6 bis 10 Kohlenstoffatomen, eine Cycloalkylgruppe mit 5 bis 12 Kohlenstoffatomen, oder eine heterocyclische Gruppe mit bis zu 9 Ringkohlenstoffatomen steht oder zusammen mit $R^1$ eine Alkylenkette mit 3 bis 10 Kohlenstoffatomen bildet oder eine $NHR^3$-Gruppe darstellt, worin $R^3$ H, Alkyl mit 1 bis 4 Kohlenstoffatomen, Alkenyl mit bis zu 4 Kohlenstoffatomen, CN, $CONH_2$ oder $NH_2$ bedeutet oder zusammen mit $R^1$ eine Alkylenkette mit 2 oder 3 Kohlenstoffatomen bildet, oder R eine Gruppe

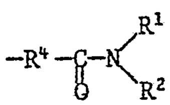

darstellt, worin $R^1$, $R^2$ und X die oben angegebenen Bedeutungen haben und $R^4$ eine direkte Bindung, eine Alkylengruppe mit bis zu 8 Kohlenstoffatomen oder eine Arylengruppe mit 6 bis 10 Kohlenstoffatomen bedeutet.

Verschiedenartige Verbindugen der Formel (I) sind dabei verwendbar. Eine geeignete und bevorzugte Verbindungsklasse entspricht der allgemeinen Formel (II)

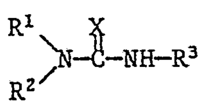

(II),

worin $R^1$, $R^2$, $R^3$ und X die oben angegebenen Bedeutungen haben.

Eine weitere geeignete Verbindungsklasse entspricht der allgemeinen Formel (III)

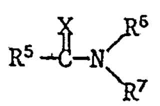

(III),

worin $R^5$ für H, Alkyl mit 1 bis 8 Kohlenstoffatomen, Aryl, Cycloalkyl oder eine heterocyclische Gruppe sowie $R^6$ und $R^7$, die gleich oder verschieden sind, für H oder eine Alkylgruppe mit 1 bis 4 Kohlenstoffatomen stehen oder $R^6$ und $R^7$ zusammen mit dem Stickstoffatom, an das sie gebunden sind, einen heterocyclischen Ring mit bis zu 6 Kohlenstoffatomen bilden, der gegebenenfalls ein weiteres Heteroatom enthalten kann, und X die oben angegebene Bedeutung hat.

Eine andere geeignete Verbindungsklasse entspricht der allgemeinen Formel (IV)

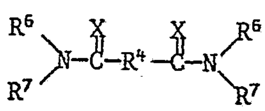

(IV),

worin $R^4$, $R^5$ und $R^7$ die oben angegebenen Bedeutungen haben.

Noch eine weitere geeignete Verbindungsklasse entspricht der allgemeinen Formel (V)

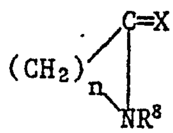

(V),

worin $R^8$ für H oder Alkyl mit 1 bis 4 Kohlenstoffatomen und n für eine ganze Zahl von 3 bis 10 stehen und X die oben angegebene Bedeutung hat.

Ist R oder $R^5$ eine $C_1$-$C_8$ Alkylgruppe, so kommen beispielsweise Methyl, Äthyl, Isopropyl, n-Butyl, sek.-Butyl, Hexyl oder Octyl in Frage.

Ist $R^1$, $R^2$, $R^3$, $R^6$, $R^7$ oder $R^8$ eine $C_1$- $C_4$-Alkylgruppe, so kommen beispielsweise Methyl, Äthyl, Isopropyl, n-Butyl oder sek.-Butyl in Frage.

Ist $R^1$, $R^2$ oder $R^3$ Alkenyl mit bis zu 4 Kohlenstoffatomen, so kommen beispielsweise Allyl, Propenyl oder Butenyl in Frage.

Bilden $R^1$ und $R^2$ bzw. $R^6$ und $R^7$ einen Heterocyclus, so kann dies beispielsweise ein Pyridin-, Morpholin-, Piperidin- oder Piperazinring sein.

Ist R ein Heterocyclus mit bis zu 9 Kohlenstoffatomen, so kann dieser beispielsweise ein Pyridin-, Morpholin-, Piperidin-, Indol- oder Chinolinring sein.

Ist R ein Arylring mit 6-10 Kohlenstoffatomen, so kommt beispielsweise ein Benzol- oder Naphthalinring in Betracht.

Ist R ein Cycloalkylring mit 5-12 Kohlenstoffatomen, so kommt beispielsweise ein Cyclopentyl-, Cyclohexyl-, Cyclooctyl- oder Cyclododecylring in Betracht.

Ist $R^5$ Aryl, Cycloalkyl oder eine heterocyclische Gruppe, so kann dies ein wie oben für R beschriebener Rest sein.

Bilden R und $R^1$ zusammen eine Alkylenkette mit 3 bis 10 Kohlenstoffatomen, so kommt dafür beispielsweise Propylen, Butylen, Hexylen oder Decamethylen in Frage.

Ist $R^4$ eine Alkylengruppe mit bis zu 8 Kohlenstoffatomen, so kommt dafür beispielsweise Methylen, Äthylen, Propylen, Hexylen oder Octylen in Frage.

Ist $R^4$ eine Arylengruppe mit 6 bis 10 Kohlenstoffatomen, so kommt dafür beispielsweise Phenylen oder Naphthylen in Frage.

Die erfindungsgemäss verwendeten Salze lassen sich dadurch herstellen, dass man Dimethyl-methylphosphonat, Monomethyl-methylphosphonat oder Methylphosphonsäure mit einer Verbindung der wie oben definierten allgemeinen Formel (I) vermischt, gegebenenfalls in einem wässrigen oder organischen Lösungsmittel sowie gegebenenfalls unter einer Inertgasatmosphäre und nötigenfalls unter Erhitzen zur Bildung des Salzes.

Eine solche Menge Dimethyl-methylphosphonat, Monomethyl-methylphosphonat oder Methylphosphonsäure wird dabei eingesetzt, dass sie wahlweise mit einem oder mehreren salzbildenden Stickstoffatomen in der Verbindung der Formel (I) zu einem Monosalz, Disalz oder höheren Salz reagiert. Üblicherweise stellt man ein Monosalz oder Disalz her, was ein bzw. zwei Mol Phosphonsäure oder Ester pro Mol der Verbindung der Formel (I) erfordert.

Bei Verwendung von Methylphosphonsäure oder deren Monomethylester erfolgt die Salzbildung schnell, und milde Bedingungen sind anwendbar. Die Säure und die Verbindung der Formel (I) können einfach bei Raumtemperatur zur Salzbildung vermischt werden. Ist die Verbindung der Formel (I) eine viskose Flüssigkeit oder ein Feststoff, so kann man das Gemisch z.B. bis auf 100°C erhitzen, um eine rationelle Umsetzung zu erzielen. Gewünschtenfalls kann man ein wässriges oder organisches Lösungsmittel anwenden, das nach beendeter Reaktion entfernt wird.

Bei Verwendung von Dimethyl-methylphosphonat (DMMP) sind schärfere Reaktionsbedingungen erforderlich, um die Salzbildung zu erzwingen. Das Reaktionsgemisch kann bis auf 180°C, gegebenenfalls unter einem inerten Gas wie Stickstoff, erhitzt werden. Mehrere Stunden langes Erhitzen auf 100°C bis 180°C kann dabei notwendig sein. Gewünschtenfalls kann man die Reaktion in einem wässrigen oder organischen Lösungsmittel, z.B. einem Kohlenwasserstofflösungsmittel wie Toluol oder Xylol, durchführen.

Methylphosphonsäure und deren Ester sowie die Verbindungen der Formel (I) sind sämtlich bekannte Verbindungen und auf verschiedenen Wegen herstellbar.

Beispiele für zur Salzbildung verwendbare Verbindungen der Formel (I) sind unter anderem Harnstoff, Thioharnstoff, N-Methylharnstoff, N-Allylharnstoff, N,N-Diallylharnstoff, N,N′-Dimethylharnstoff, Äthylenharnstoff, Biuret, (Thio)acetamid, (Thio)propionamid, (Thio)butyramid, (Thio)octanamid, Malonamid, Mono- oder Dithiomalonamid, Succinamid, Mono- oder Dithiosuccinamid, Sebacamid, Pyrrolidon, Piperidinon, (Thio)caprolactam und (Thio)dodecalactam.

Die erfindungsgemäss verwendeten Salze kann man für sich oder zusammen mit anderen, wie den unten angegebenen flammhemmenden Stoffen einsetzen, um Harze flammhemmend zu machen.

Die erfindungsgemäss verwendeten Salze kann man in das Harz einarbeiten, indem man sie dem zur Herstellung des Harzes verwendeten Reaktionsgemisch zusetzt.

Die Menge an flammhemmendem Salz, die in das Harz eingearbeitet werden kann, ist von dem erforderlichen Flammhemmgrad abhängig. Typischerweise kann die Menge an flammhemmendem Salz

zwischen 1 und 100 Teilen, vorzugsweise 3 und 50 Gewichtsteilen auf hundert Gewichtsteile Harz liegen.

Beliebige, bei Temperaturen bis zu 160°C verarbeitbare Harze, einschliesslich kalthärtende Harze, sind dabei verwendbar.

Zu geeigneten Harzen zählen Epoxyharze wie ein mit Phenol/Formaldehydnovolak gehärtetes Epoxyd, schäumbare Phenol/Formaldehydharze, einschliesslich esterhärtenden alkalischen Phenol/Formaldehydharzen, Harnstoff/Formaldehydharzen, ungesättigten Polyesterharzen sowie Anstrichstoffen wie Polyvinylacetatdispersionsfarben. Aus den Harzen hergestellte oder diese eingebaut enthaltende Artikel sind ebenfalls zur Verwendung mit den flammhemmenden Salzen geeignet, wie Spanplatten, z.B. mit Harnstoff/Formaldehyd gebundene Spanplatten.

Die Salze können mit anderen flammhemmenden Verbindungen vermischt werden. Dabei handelt es sich beispielsweise um halogenhaltige Verbindungen wie aliphatische und aromatische Bromverbindungen, oxyalkylierte Phosphatester, Chloralkylphosphate, Phosphonate oder Triarylphosphate. Geeignete Verbindungen sind beispielsweise Pentabromdiphenyläther, Dibromkresylglycidyläther, Tetrabrombisphenol A, Dibromneopentylglykol, ein durch Umsetzung von Tetrabromphthalsäureanhydrid mit Äthylenoxyd und/oder Propylenoxyd erhaltenes Diol, Tris-(chloräthyl)-phosphat, Tris-(monochlorpropyl)-phosphat, Diäthyl-bis-(hydroxyäthyl)-aminomethylphosphonat, isopropylierte oder t-butylierte Phenylphosphatgemische wie in der britischen Patentschrift Nr. 1 146 173 beschrieben, Trikresylphosphat, Trixylylphosphat sowie Kresyldiphenylphosphat.

Ebenfalls verwendbar sind Gemische der erfindungsgemässen Salze mit Phosphonsäureaminsalzen der allgemeinnen Formel (VI) und/oder (VII).

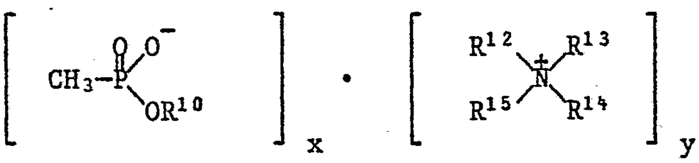

VI

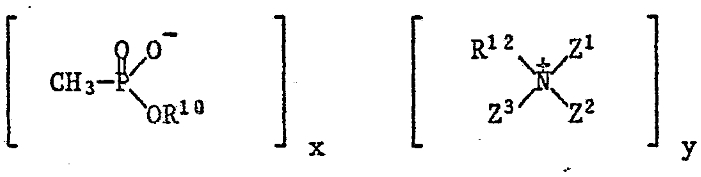

VII ,

worin x und y solche ganze Zahlen darstellen, das die gleiche Anzahl negativer und positiver Ladungen vorliegt, $R^{10}$ für Wasserstoff oder Methyl, $R^{12}$ für Wasserstoff oder Methyl und $R^{13}$ für eine mit 1-3 gegebenenfalls mit einer Oxyalkylenkette substituierte Hydroxylgruppen substituierte $C_2$-$C_4$-Alkylgruppe stehen, wobei nicht mehr als je eine Hydroxylgruppe an einem Kohlenstoffatom vorliegt, $R^{14}$ und $R^{15}$ gleich oder verschieden sein und eine wie für $R^{13}$ angegebene Gruppe, Wasserstoff, eine $C_1$-$C_4$-Alkylgruppe oder eine gegebenenfalls am aromatischen Ring durch eine Alkylgruppe mit 1 bis 12 Kohlenstoffatomen, eine gegebenenfalls durch eine Oxyalkylenkette substituierte Hydroxylgruppe und/oder 1-3 Halogenatome substituierte Phenyl- oder Benzylgruppe bedeuten können, oder $R^{15}$ eine Gruppe der Formel (VIII)

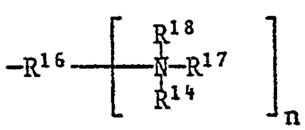

(VIII)

darstellt, worin $R^{16}$ für eine Alkylengruppe mit 2-4 Kohlenstoffatomen, eine Phenylengruppe, eine Xylylengruppe, eine Diphenylmethangruppe oder eine Gruppe der Formel

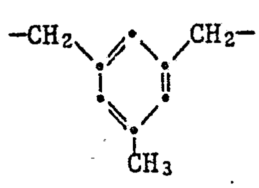

oder

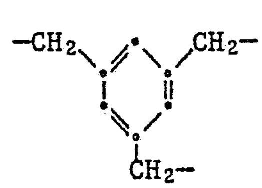

,

wobei aromatische Ringe in einer Gruppe $R^{16}$ durch eine Alkylgruppe mit 1-12 Kohlenstoffatomen, eine gegebenenfalls durch eine Oxyalkylenkette substituierte Hydroxylgruppe und/oder 1-3 Halogenatome substituiert sein können, $R^{17}$ für Wasserstoff oder Methyl, wobei das Stickstoffatom dann eine positive Ladung trägt, oder $R^{17}$ fehlt, sowie $R^{18}$für Wasserstoff oder eine wie für $R^{13}$ angegebene Gruppe und n für 1

oder 2 stehen, oder $R^{14}$ und $R^{15}$ verknüpft sein und mit dem Stickstoff einen 5- oder 6-gliedrigen, gegebenenfalls ein Sauerstoffatom enthaltenden heterocyclischen Ring bilden können, sowie $Z^1$, $Z^2$ und $Z^3$ gleich oder verschieden sind und Wasserstoff, eine geradkettige oder verzweigte $C_1$-$C_{12}$-Alkylgruppe, eine geradkettige oder verzweigte $C_3$-$C_{12}$-Alkinylgruppe, eine $C_4$-$C_{12}$-Cycloalkylgruppe, eine gegebenenfalls durch eine geradkettige oder verzweigte $C_1$-$C_4$-Alkylgruppe, eine $C_1$-$C_4$-Alkoxygruppe, Amino, Methylamino, Halogen oder Nitro substituierte Phenyl- oder Naphthylgruppe oder eine $C_7$-$C_{12}$-Aralkylgruppe bedeuten, oder $Z^2$ und $Z^3$ zusammen mit dem Stickstoffatom, an das sie gebunden sind, ein gesättigtes oder ungesättigtes, 3-7-gliedriges, gegebenenfalls ein weiteres Heteroatom enthaltendes sowie gegebenenfalls durch eine geradkettige oder verzweigte $C_1$-$C_4$-Alkylgruppe, eine $C_1$-$C_4$-Alkoxygruppe, Amino, Methylamino, eine $C_1$-$C_4$-Aminoalkylgruppe, Halogen oder Nitro substituiertes Ringsystem bilden, oder $Z^1$, $Z^2$ und $Z^3$ zusammen mit dem Stickstoffatom, an das sie gebunden sind, einen 8-12-gliedrigen bicyclischen, gegebenenfalls ein weiteres Heteroatom enthaltenden Ring bilden oder $Z^1$ eine Gruppe der Formel

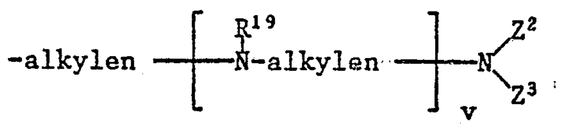

darstellt, worin Alkylen für eine Gruppe mit 2 bis 12 Kohlenstoffatomen, v für 0 oder eine ganze Zahl von 1 bis 5 und $R^{19}$ für Wasserstoff oder eine geradkettige oder verzweigte $C_1$-$C_{16}$-Alkylgruppe stehen sowie $Z^2$ und $Z^3$ die oben angegebenen Bedeutungen haben, oder $Z^1$ eine Gruppe der Formal

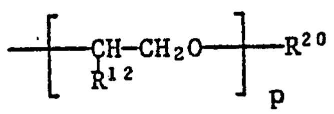 oder 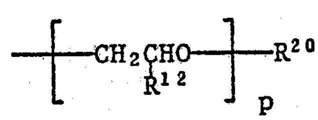

darstellt, worin $R^{12}$ die oben angegebene Bedeutung hat und $R^{20}$ für eine $C_1$-$C_{12}$-Alkylgruppe und p für eine ganze Zahl von 1-10, vorzugsweise 1-4, stehen, oder $Z_3$ eine Gruppe der Formel (VIIIa)

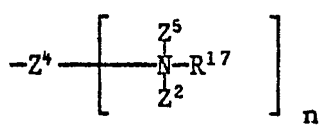

(VIIIa)

darstellt, worin $Z^4$ für eine Alkylengruppe mit 2-12 Kohlenstöffatomen, eine Phenylengruppe, eine Xylylengruppe, eine Diphenylmethangruppe oder eine Gruppe der Formel

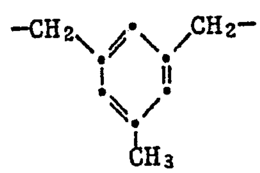 oder 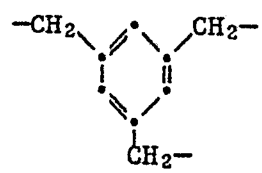

steht, wobei aromatische Ringe in einer Gruppe $Z^4$ durch eine Alkylgruppe mit 1-12 Kohlenstoffatomen, Hydroxyl und/oder 1-3 Halogenatome substituiert sein können, $R^{17}$ für Wasserstoff oder Methyl, wobei das Stickstoffatom dann eine positive Ladung trägt, oder $R^{17}$ fehlt, sowie $Z^5$ für Wasserstoff oder eine wie für $Z^1$ angegebene Gruppe und n für 1 oder 2 stehen, oder $Z^2$ und $Z^5$ mit dem Stickstoff unter Bildung eines gegebenenfalls ein weiteres Heteroatom enthaltenden 3- bis 7-gliedrigen heterocyclischen Ringes verknüpft sein können.

Die Salze der Formeln (VI) und (VII) lassen sich dadurch herstellen, dass man Methylphosphonsäure oder deren Ester der Formel (IX)

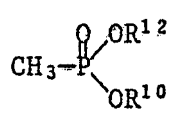

(IX),

worin $R^{12}$ die oben angegebene Bedeutung hat und $R^{10}$ für Wasserstoff oder Methyl steht, mit einem Amin der

Formel (X) oder (XI)

$$R^{15}-\underset{R^{14}}{\underset{|}{N}}-R^{13} \qquad (X)$$

$$Z^{3}-\underset{Z^{2}}{\underset{|}{N}}-Z^{1} \qquad (XI),$$

worin $R^{13}$, $R^{14}$, $R^{15}$, $Z^1$, $Z^2$ und $Z^3$ die oben angegebenen Bedeutungen haben, gegebenenfalls in einem wässrigen oder organischen Lösungsmittel sowie gegebenenfalls unter einer Inertgasatmosphäre und nötigenfalls unter Erhitzen, um Salzbildung zu erzwingen, vermischt.

Eine solche Menge Methylphosphonsäure oder deren Ester der Formel (XI) wird dabei eingesetzt, dass sie wahlweise mit einer oder mehreren Amingruppen in dem Amin der Formel (X) oder (XI) zu einem Monosalz, Disalz oder höheren Salz reagiert.

Das Verhältnis zwischen dem Salz und den übrigen flammhemmenden Verbindungen kann dabei 5:95 bis 95:5 betragen.

Die Zusammensetzungen können auch Methylphosphonsäure und deren Monomethyl- oder Dimethylester enthalten, die nicht mit der vorhandenen Verbindung der Formel (I) reagiert haben, doch enthält die Formulierung vorzugsweise keine sauren Zusatzstoffe.

Es liegt ebenfalls im Umfang der vorliegenden Erfindung, weitere Stoffe in den erfindungsgemässen Zusammensetzungen zu verwenden, wo bestimmte Endzwecke erreicht werden sollen. Zu solchen Stoffen zählen, ohne darauf beschränkt zu sein, Haftvermittler, Antioxidantien, Antistatika, Bakteriostatika, Färbemittel, Wärmeschutz mittel, Lichtschutzmittel, Pigmente, Weichmacher, Konservierungsmittel, Ultraviolettschutzmittel sowie Füllstoffe, wie in Modern Plastics Encyclopedia [Moderne Kunststoffenzyklopädie], Band 58, Nummer 10A, S. 170-187, beschrieben.

Die Erfindung sei durch nachfolgende Beispiele erläutert, wobei "Teile" Gewichtsteile bedeuten

Herstellung des Harnstoff/DMMP-Salzes

Man erhitzt 600 g (10 Mol) Harnstoff und 1240 g (10 Mol) Dimethyl-methylphosphonat 14 Stunden lang bei 140°C unter einer Stickstoffatmosphäre. Man kühlt auf 50°C ab und baut den Apparat zur Vakuumdestillation um. Nicht umgesetzte Ausgangsstoffe werden durch Destillation bei 15,6 mbar Druck bis zu einer Innentemperatur von 140°C entfernt.

Dabei erhält man 1645,8 g eines farblosen zähflüssigen Amidsalzes mit der folgenden Elementaranalyse: C, 25,90%; H, 7,13%; N, 15.47% und P 16,62%. Berechnet für $C_4H_{13}N_2O_4P$: C, 26,09%; H, 7,07%, N, 15,22% und P, 16,85%.

Beispiel 1

Ein aus Phenol und Formaldehyd im Molverhältnis 1:2 hergestelltes Resol mit einem Feststoffgehalt von 49,2% und einem Natriumhydroxydgehalt von 0,42% (38,1 Teile) wird mit einer Lösung von Kaliumhydroxyd (5,95 Teile) in Wasser (5,95 Teile) verrührt. Das Gemisch wird auf 25°C abgekühlt, was Komponente A ergibt.

Die Komponenten B, C und D werden durch Auflösen von Äthylencarbonat, einem Tensid (Empimin 3060 - Albright & Wilson), Diäthylenglykol und dem oben beschriebenen Harnstoff/DMMP-Salz in Wasser hergestellt. Die Formulierungen sind wie folgt:

| | B | C | D |
|---|---|---|---|
| Äthylencarbonat | 15 | 15 | 14,6 |
| Empimin 3060 | 1 | 1 | 1 |
| Diäthylenglykol | - | 10 | 4,9 |
| Harnstoff/DMMP-Salz | - | - | 1,2 |
| Wasser | 34 | 24 | 28,3 |
| | 50 | 50 | 50 |

Komponente A (50 Teile) wird durch einen Glasküge1chen enthaltenden Zylinder gedrückt, um einen stabilen Schaum zu bilden, der dann mit der Komponente B (50 Teile) besprüht wird. Der so entstandene

Schaum geliert in ungefähr 20 Sekunden zu einem festen Schaumstoff. Dieser wird bei 25°C bis zur Gewichtskonstanz getrocknet und dann 24 Stunden lang bei 23°C und 50% relativer Feuchte klimatisiert. Das Endprodukt ist ein feinzelliger Schaumstoff mit einer Trockendichte von 82,0 kg/m³. Bei Berührung dieses Schaumstoffs mit einer Flamme wird die Probe rasch durch Verglimmen zerstört.

Bei Wiederholung der obigen Arbeitsweise mit Komponente A und Komponente C ergibt sich ein feinzelliger Schaumstoff mit einer Trockendichte von 155,3 kg/m³. Bei Berührung dieses Schaumstoffs mit einer Flamme wird die Probe rasch durch Verglimmen zerstört.

Bei Wiederholung der obigen Arbeitsweise mit Komponente A und Komponente D ergibt sich ein feinzelliger Schaumstoff mit einer Trockendichte von 214 kg/m³. Bei Berührung dieses Schaumstoffs mit einer Flamme bildet die Probe eine harte verkohlte Stelle, wo die Flamme auftrifft. Der Schaumstoff zeigt überhaupt kein Verglimmen.

Die drei Produkte wurden der Sauerstoffindex-Grenzprüfung und der Prüfung nach DIN 4102 B2 unterzogen, mit den folgenden Ergebnissen.

| | | DIN 4102 B2 | | |
|---|---|---|---|---|
| PF-Schaum | Sauerstoffindex % | Zeit bis Bezugsmarke (Sekunden) | Max. Flammen-höhe (cm) | Brenn-zeit (Sek.) |
| A + B | < 17,9 | - | 4 | 15 |
| A + C | 19,2 | - | 11 | 15 |
| A + D | 20,8 | - | 5 | 15 |

Beispiel 2

Holzspäne werden auf 2% Feuchtigkeitsgehalt getrocknet. Die Späne (100 Teile) werden in einen Lodige-Schneidhobelmischer gegeben und getrommelt.

Harnstoff/Formaldehydharz mit einem Molverhältnis von Formaldehyd zu Harnstoff von 1,25:1 (15,35 Teile), das oben beschriebene Harnstoff/DMMP-Salz (10 Teile), Wasser (2,94 Teile), Wachsemulsion (Mobil 749, 0,82 Teile) und 15% wässrige Ammoniumchloridlösung (1,0 Teile) werden zu einer Emulsion vermischt.

Man sprüht die Emulsion auf die Holzspäne, trommelt die beharzten Späne 5 Minuten lang und gibt diese in einen quadratischen Holzrahmen (Innenabmessungen 35,5 cm × 35,5 cm). Die Späne werden bei Raumtemperatur 20 Sekunden lang bei 8 kg/cm² vorgepresst. Der Rahmen wird von den Spänen entfernt und diese werden 15 Minuten lang bei 150°C und 25 kg/cm² bis auf 19 mm-Anschläge verpresst. Die Platte wird eine Woche lang bei 20°C und 65% relativer Feuchte klimatisiert.

Wenn die Platte 1 Minute lang in die Flamme eines Bunsenbrenners gehalten und dann herausgenommen wird, geht die Flamme sofort aus.

Vergleich

Eine Platte wird wie oben aber ohne das Harnstoff/DMMP-Salz hergestellt. Wenn die Platte 1 Minute lang in die Flamme eines Bunsenbrenners gehalten und dann herausgenommen wird, brennt sie weiter.

Die beiden Platten wurden der Sauerstoffindex-Grenzprüfung und dem Test nach UL 94 mit den folgenden Ergebnissen unterzogen.

| | Sauerstoffindex % | UL 94 |
|---|---|---|
| Platte ohne Harnstoff/DMMP-Salz | 26,9 | HB |
| Platte mit Harnstoff/DMMP-Salz | 40,9 | V-0 |

Beispiel 3

Polyvinylacetat-Latexdispersionsfarbe

Durch das oben beschriebene Harnstoff/DMMP-Salz wird die Bildung einer verkohlten Schicht auf der folgenden anschwellenden Anstrichformulierung stark erhöht.

Harnstoff/DMMP-Salz 22,9 Teile
Dipentaerythrit 3,8
Melamin 7,7
Melamin/Formaldehydharz 1,9
Chloriertes Paraffin (70% Cl) 4,6
Coaleszenzmittel 2,0
Titandioxyd 7,7
Polyvinylacetatharz 9,5
Wasser, Verdickungsmittel 39,9

Der Anstrich wird (zweimal) auf 15 cm × 18 mm × 18 mm grosse, lufttrockene Kiefernholzblöcke aufgetragen und nach 3 Tage langer Trocknung bei 23° C und 50% relativer Feuchte einer wie im Test nach DIN 4102 B2 verwendeten Propanflamme ausgesetzt, aber für einen länge ren Zeitraum. Die Ergebnisse sind wie folgt:

| | Entzündungszeit | Geschwollene verkohlte Stelle (mm) |
|---|---|---|
| Ohne Harnstoff/DMMP-Salz | 26 Sekunden | keine |
| Mit Ammoniumpolyphosphat | Länger als 10 Minuten | gering |
| Mit Harnstoff/DMMP-Salz | Länger als 10 Minuten | 5 |

Beispiel 4

Man vermischt 100 g Diglycidyläther von Bisphenol A mit einem Epoxidgehalt von 5,3 Mol/kg bei 100° C mit 56 g eines aus Phenol und Formaldehyd im Molverhältnis 1,0:0,56 unter Entfernung überschüssigen Phenols hergestellten Novolak-Härters für das Epoxyharz. Das Gemisch aus heissem Harz und Härter versetzt man mit

20 g des oben beschriebenen Harnstoff/DMMP-Salzes und 0,2 g 1-Methylimidazol als Beschleuniger für die Epoxyhärtung. Das so erhaltene Gemisch wird bei 100° C entgast und in eine geeignete Giessform gegossen, eine Stunde lang bei 120°C gehalten und dann weitere 8 Stunden lang auf 150°C erhitzt. Das gehärtete Produkt ist ein klarer, harter, etwas spröder Feststoff, der sich bei Anlegen einer Flamme nicht entzündet.

Die obige Arbeitsweise wird wiederholt, mit dem Unterschied, dass die Formulierung das dabei verwendete DMMP-Salz nicht enthält. Beim Anlegen einer Flamme entzündet sich das gehärtete Produkt und brennt mit rauchender Flamme.

Die beiden Produkte wurden der Sauerstoffindex-Grenzprüfung und dem Test nach UL 94 unterzogen, mit den folgenden Ergebnissen.

| | Sauerstoffindex % | UL 94 |
|---|---|---|
| Produkt mit Harnstoff/ DMMP-Salz | 28,3 | V-0 |
| Produkt ohne Harnstoff/ DMMP-Salz | 24,1 | HB |

## Patentansprüche

1. Zusammensetzungen, dadurch gekennzeichnet, dass sie aus einem bei Temperaturen bis zu 160°C verarbeitbaren Harz mit einer darin eingearbeiteten flammhemmenden Menge eines durch Umsetzung von Dimethyl-methylphosphonat, Monomethyl-methylphosphonat oder Methylphosphonsäure mit einer Verbindung der allgemeinen Formel (I)

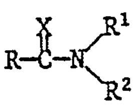

I,

worin X für O oder S, $R^1$ für H, Alkyl mit 1 bis 4 Kohlenstoffatomen, Alkenyl mit bis zu 4 Kohlenstoffatomen, CN, $CONH_2$ oder $NH_2$ und $R^2$ für H, Alkyl mit 1 bis 4 Kohlenstoffatomen oder Alkenyl mit bis zu 4 Kohlenstoffatomen stehen oder $R^1$ und $R^2$ zusammen mit dem Stickstoffatom, an das sie gebunden sind, einen heterocyclischen Ring mit bis zu 6 Kohlenstoffatomen bilden, der gegebenenfalls ein weiteres Heteroatom enthalten kann, und R für H, eine Alkylgruppe mit 1 bis 8 Kohlenstoffatomen, eine Arylgruppe mit 6 bis 10 Kohlenstoffatomen, eine Cycloalkylgruppe mit 5 bis 12 Kohlenstoffatomen oder eine heterocyclische Gruppe mit bis zu 9 Ringkohlenstoffatomen steht oder zusammen mit $R^1$ eine Alkylenkette mit 3 bis 10 Kohlenstoffatomen bildet oder eine $NHR^3$-Gruppe darstellt, worin $R^3$ H, Alkyl mit 1 bis 4 Kohlenstoffatomen, Alkenyl mit bis zu 4 Kohlenstoffatomen, CN, $CONH_2$ oder $NH_2$ bedeutet oder zusammen mit $R^1$ eine Alkylenkette mit 2 oder 3 Kohlenstoffatomen bildet, oder R eine Gruppe

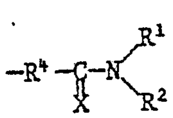

darstellt, worin $R^1$, $R^2$ und X die oben angegebenen Bedeutungen haben und $R^4$ eine direkte Bindung, eine Alkylengruppe mit bis zu 8 Kohlenstoffatomen oder eine Arylen gruppe mit 6 bis 10 Kohlenstoffatomen bedeutet, gebildeten Salzes bestehen

2. Harzzusammensetzungen nach Anspruch 1, dadurch gekennzeichnet, dass die Verbindungen der Formel I auch der allgemeinen Formel (II)

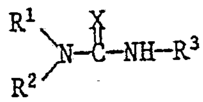

II,

worin $R^1$, $R^2$, $R^3$ und X die in Anspruch 1 angegebenen Bedeutungen haben, entsprechen.

3. Harzzusammensetzungen nach Anspruch 1, dadurch gekennzeichnet, dass die Verbindungen der Formel (I) auch der allgemeinen Formel (III)

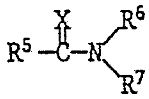

III,

worin $R^5$ für H, Alkyl mit 1 bis 8 Kohlenstoffatomen, eine Aryl- und Cycloalkylgruppe oder eine heterocyclische Gruppe steht sowie $R^6$ und $R^7$ gleich oder verschieden sind und H oder eine Alkylgruppe mit 1 bis 4 Kohlenstoffatomen bedeuten und X die in Anspruch 1 angegebene Bedeutung hat, entsprechen.

4. Harzzusammensetzungen nach Anspruch 1, dadurch gekennzeichnet, dass die Verbindungen der Formel (I) auch der allgemeinen Formel (IV)

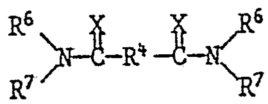

IV,

worin $R^4$ und X die in Anspruch 1 sowie $R^6$ und $R^7$ die in Anspruch 3 angegebenen Bedeutungen haben, entsprechen.

5. Zusammensetzungen nach Anspruch 1, dadurch gekennzeichnet, dass die Verbindungen der Formel I auch der allgemeinen Formel (V)

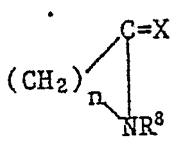

V,

worin $R^8$ für H oder Alkyl mit 1 bis 4 Kohlenstoffatomen und n für eine ganze Zahl von 3 bis 10 stehen und X die in Anspruch 1 angegebene Bedeutung hat, entsprechen.

6. Zusammensetzungen nach Anspruch 1, dadurch gekennzeichnet, dass Harnstoff als Verbindung der Formel I vorliegt.

7. Zusammensetzungen nach einem der vorhergehenden Ansprüche, dadurch gekennzeichnet, dass sie ferner eine weitere, unter aliphatischen und aromatischen Bromverbindungen, oxyalkylierten Phosphatestern, Chloralkylphosphaten, Phosphonaten oder Triarylphosphaten ausgewählte flammhemmende Verbindung erhalten.

8. Zusammensetzungen nach einem der vorhergehenden Ansprüche, dadurch gekennzeichnet, dass sie ferner Phosphonsäureaminsalze der allgemeinen Formel VI und/oder VII

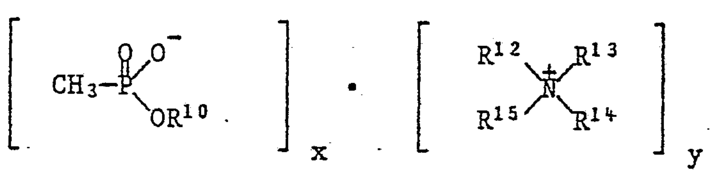

VI

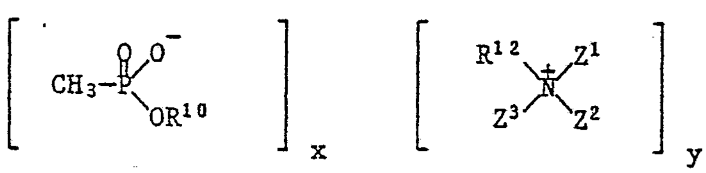

VII

worin x und y solche ganze Zahlen darstellen, dass die gleiche Anzahl negativer und positiver Ladungen

vorliegt, $R^{10}$ für Wasserstoff oder Methyl, $R^{12}$ für Wasserstoff oder Methyl und $R^{13}$ für eine mit 1-3 gegebenenfalls mit einer Oxyalkylenkette substituierte Hydroxylgruppen substitu ierte $C_2$-$C_4$-Alkylgruppe stehen, wobei nicht mehr als je eine Hydroxylgruppe an einem Kohlenstoffatom vorliegt, $R^{14}$ und $R^{15}$ gleich oder verschieden sein und eine wie für $R^{15}$ angegebene Gruppe, Wasserstoff, eine $C_1$-$C_4$-Alkylgruppe oder eine gegebenenfalls am aromatischen Ring durch eine Alkylgruppe mit 1-12 Kohlenstoffatomen, eine gegebenenfalls mit einer Oxyalkylenkette substituierte Hydroxylgruppe und/oder 1-3 Halogenatome substituierte Phenyl- oder Benzylgruppe bedeuten können, oder $R^{15}$ eine Gruppe der Formel (VIII)

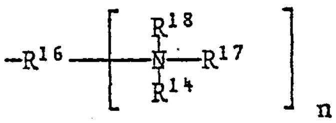

VIII

darstellt, worin $R^{16}$ für eine Alkylengruppe mit 2-4 Kohlenstoffatomen, eine Phenylengruppe, eine Xylylengruppe, eine Diphenylmethangruppe oder eine Gruppe der Formel

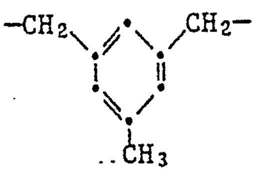

oder

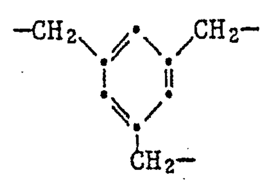

wobei aromatische Ringe in einer Gruppe $R^{16}$ durch eine Alkylgruppe mit 1-12 Kohlenstoffatomen, eine gegebenenfalls mit einer Oxyalkylenkette substituierte Hydroxylgruppe und/oder 1-3 Halogenatomen substituiert sein können, $R^{17}$ für Wasserstoff oder Methyl, wobei das Stickstoffatom dann eine positive Ladung trägt, oder $R^{17}$ fehlt, sowie $R^{18}$ für Wasserstoff oder eine wie für $R^{13}$ angegebene Gruppe und n für 1 oder 2 stehen, oder $R^{14}$ und $R^{15}$ verknüpft sein und mit dem Stickstoff einen 5- oder 6-gliedrigen, gegebenenfalls ein Sauerstoffatom enthaltenden heterocyclischen Ring bilden können, sowie $Z^1$, $Z^2$ und $Z^3$ gleich oder verschieden sind, und Wasserstoff, eine geradkettige oder verzweigte $C_1$-$C_{12}$-Alkylgruppe, eine geradkettige oder verzweigte $C_3$-$C_{12}$-Alkinylgruppe, eine $C_4$-$C_{12}$-Cycloalkylgruppe, eine gegebenenfalls durch eine geradkettige oder verzweigte $C_1$-$C_4$-Alkylgruppe, eine $C_1$-$C_4$-Alkoxygruppe, Amino, Methylamino, Halogen oder Nitro substituierte Phenyl- oder Naphthylgruppe oder eine $C_7$-$C_{12}$-Aralkylgruppe bedeuten.

9. Zusammensetzungen nach Anspruch 7 oder 8, dadurch gekennzeichnet, dass das Verhältnis des wie in Anspruch 1 definierten Salzes zu der weiteren flammhemmenden Verbindung 5:95 bis 95:5 beträgt.

10. Zusammensetzungen nach Anspruch 1, dadurch gekennzeichnet, dass das Harz unter Epoxyharzen, Phenol/Formaldehydharzen, Harnstoff/Formaldehydharzen, ungesättigten Polyesterharzen und Anstrichmitteln ausgewählt ist.

11. Zusammensetzungen nach Anspruch 10, dadurch gekennzeichnet, dass das Harz unter mit Phenol/Formaldehydnovolak gehärteten Epoxyharzen, estergehärteten alkalischen Phenol/Formaldehydharzen und Polyvinylacetatlatexdispersionsfarben ausgewählt ist.

12. Zusammensetzungen nach Anspruch 1, dadurch gekennzeichnet, dass sie aus einem aus dem Harz hergestellten oder dieses eingebaut enthaltenden Gegenstand bestehen.

13. Zusammensetzungen nach Anspruch 12, dadurch gekennzeichnet, dass dieser Gegenstand eine Spanplatte ist.

14. Zusammensetzungen nach Anspruch 1, dadurch gekennzeichnet, dass die Menge des besagten Salzes 1 bis 100 Gewichtsteile auf 100 Gewichtsteile Harz beträgt.

15. Zusammensetzungen nach Anspruch 14, dadurch gekennzeichnet, dass dieMenge des besagten-Salzes 3 bis 50 Gewichtsteile auf 100 Gewichtsteile Harz beträgt.